# EUROPÄISCHE PATENTANMELDUNG

(11) **EP 0 661 464 A1**
(43) Veröffentlichungstag der Anmeldung: **05.07.1995**
(21) Anmeldenummer: 94120474.5
(22) Anmeldetag: 22.12.1994
(51) Int. Cl.: F16B 35/04

(54) **Befestigungselement**

(30) Priorität: 24.12.1993 DE 4344626
(71) Anmelder: PAGUAG GmbH & Co., D-40472 Düsseldorf (DE)
(72) Erfinder: Kricke, Martin, D-40699 Erkrath (DE)
(74) Vertreter: Lippert, Hans-Joachim, Dipl.-Ing.

(57) **Zusammenfassung**

Die Erfindung betrifft ein Befestigungselement zur Montage von Baugruppen oder Bauteilen in oberflächenbeschichtete oder endlackierte Karosserien von Fahrzeugen oder in sonstige Gehäuse, mittels bolzenförmiger Elemente, wie Schrauben, Schweißschrauben, Gewindestifte, o.dgl., die einseitig an den Baugruppen befestigt sind, zur Herstellung von lösbaren Verbindungen durch Einfädeln der bolzenförmigen Elemente in entsprechende Öffnungen in der Karosserie oder dem Gehäuse und Verschrauben derselben.

Durch die Erfindung soll der Einfädelvorgang der Befestigungselemente erheblich erleichtert werden und die Gefahr der Beschädigung des Oberflächenschutzes von Karosserie- oder Maschinenteilen mit einfachen, besonders billigen und damit für die Großserienproduktion geeigneten Mitteln vollständig vermieden werden.

Erfindungsgemäß ist dazu das bolzenförmige Element (1) an der Stirnseite (3) seines freien Endes mit einem Vorsatz aus einem Material versehen ist, dessen Härte geringer ist, als das im Bereich der Öffnungen befindliche Beschichtungsmaterial und daß der Vorsatz die Stirnseite (3) wenigstens teilweise überdeckt.

## Beschreibung

Die Erfindung betrifft ein Befestigungselement zur Montage von Baugruppen oder Bauteilen in oberflächenbeschichtete oder endlackierte Karosserien von Fahrzeugen oder in sonstige Gehäuse, mittels bolzenförmiger Elemente, wie Schrauben, Schweißschrauben, Gewindestifte, o.dgl., die einseitig an den Baugruppen befestigt sind, zur Herstellung von lösbaren Verbindungen nach dem Einfädeln der bolzenförmigen Elemente in entsprechende Öffnungen in der Karosserie oder dem Gehäuse und Verschrauben derselben.

Im Automobilbau oder auch bei der Herstellung von Maschinen und Einrichtungen werden in verstärktem Maße komplette Systeme oder Baugruppen von Systemlieferanten angeliefert und anschließend baugruppenweise zu kompletten Fahrzeugen oder Maschinen montiert. Beispielsweise werden die komplett vormontierten Achsbaugruppen mit der Motor-Getriebeeinheit von der Unterseite in die Karosserie gehoben, oder die Karosserie auf diese Baugruppen abgesenkt und an entsprechenden Befestigungsstellen verschraubt. Hierzu sind die vormontierten Baugruppen an den vorgesehenen Befestigungsstellen üblicherweise bereits mit Befestigungselementen, wie Schrauben, Stehbolzen, Stiften o.dgl. versehen, die bei der Montage gleichzeitig durch Bohrungen oder Löcher in der Karosserie zu führen sind, um anschließend die Schraubverbindung herzustellen.

Infolge der Vielzahl der Befestigungstellen muß grundsätzlich damit gerechnet werden, daß beim Zusammenführen der Baugruppen die entsprechenden Bohrungen nicht sofort getroffen werden.

Aus diesem Grund wird die zu befestigende Baugruppe bewegt, z.B. durch Rütteln oder ähnliche Manipulationen, bis die Schrauben oder Bolzen in die vorgesehenen Löcher rutschen. Bei diesem Vorgang können jedoch Beschädigungen des Oberflächenschutzes der Karosserien, die beispielsweise bereits endlackiert sind, nicht vermieden werden.

Zur Vereinfachung dieses Vorganges wurden deshalb die Schrauben oder Bolzen mit Zentrierspitzen versehen, so daß das Einfädeln der Verbindungselemente ganz wesentlich erleichtert wird, da ein größerer Spielraum zur Verfügung steht. Nachteilig ist hierbei jedoch, daß die Gefahr der Beschädigungen des Oberflächenschutzes der Karosserie durch die Zentrierspitzen wesentlich vergrößert wird. Die Folge sind aufwendige Nacharbeiten zur Beseitigung der Schäden oder Kratzer oder es muß andernfalls mit einer vorzeitigen Korrosion gerechnet werden.

Der Erfindung liegt deshalb die Aufgabe zugrunde, den Einfädelvorgang der Befestigungselemente erheblich zu erleichtern und die Gefahr der Beschädigung des Oberflächenschutzes von Karosserie- oder Maschinenteilen mit einfachen, besonders billigen und damit für die Großserienproduktion geeigneten Mitteln vollständig zu vermeiden.

Erfindungsgemäß wird die der Erfindung zugrundeliegende Aufgabe bei einem Befestigungselement der eingangs genannten Art dadurch gelöst, daß das bolzenförmige Element an der Stirnseite seines freien Endes mit einem Vorsatz aus einem Material versehen ist, dessen Härte geringer ist, als das im Bereich der Öffnungen befindliche Beschichtungsmaterial und daß der Vorsatz die Stirnseite wenigstens teilweise überdeckt.

Durch die erfindungsgemäße Ausgestaltung des Befestigungselementes wird die Montage von Baugruppen in Karosserien ganz erheblich verbessert, da einerseits ein leichtes Einfädeln der Befestigungselemente ermöglicht wird und andererseits die Gefahr einer Beschädigung von Lackschichten oder Oberflächenbeschichtungen vollständig beseitigt ist.

In einer Ausgestaltung der Erfindung ist der Vorsatz an der Stirnfläche des bolzenförmigen Elementes in der Weise befestigt, daß dieser zumindest teilweise aus der Stirnfläche hervorsteht, wobei es von Vorteil ist, wenn der Vorsatz rotationssymmetrisch ausgebildet ist.

Eine mit einer Spitze vergleichbare Wirkungsweise kommt dann zustande, wenn die Stirnseite des Vorsatzes zumindest im mittleren Bereich ballig abgerundet ist.

Ein besonders vorteilhafte Fortbildung der Erfindung ist dadurch gekennzeichnet, daß der Vorsatz als Kugel ausgebildet ist, die in eine zentrische Bohrung in der Stirnseite des bolzenförmigen Elementes kraftschlüssig eingelegt ist und daß die Kugel teilweise aus der Stirnseite des Elementes hervorsteht.

Damit läßt sich der Vorsatz sehr billig in einer für die Massenproduktion geeigneten Weise herstellen, wobei auch die Montage in dem bolzenförmigen Element, wie beispielsweise einer Schraube, in wenigen Arbeitsgängen erfolgen kann. Die kraftschlüssige Befestigung der Kugel in der Bohrung kann einfach dadurch erfolgen, daß der Durchmesser der Kugel geringfügig größer gewählt wird, als der Durchmesser der Bohrung und die Kugel lediglich in die Bohrung eingepreßt wird. Die Tiefe der Bohrung sollte dabei über der Hälfte des Kugeldurchmessers liegen, so daß die Kugel nach dem Einpressen teilweise aus der Bohrung hervorsteht. Damit wird die Kugel sicher befestigt, ohne daß zusätzliche Mittel zu deren Lagesicherung notwendig wären. Eine besonders gute Befestigung der Kugel ist ohnehin nicht erforderlich, da lediglich sichergestellt werden muß, daß diese während der Montage der Schraube an einer Baugruppe oder einem Bauteil und deren Transport zum Montageort nicht heraus fallen kann. Außerdem wird die Kugel während des Einbaus der Baugruppe in die Karosserie hauptsächlich in axialer Richtung belastet, d.h., die einwirkenden Kräfte drücken die Kugel in die Bohrung.

Wird die Stirnseite des bolzenförmigen Elementes mit einer umlaufenden Fase versehen, so wird das Einfädeln weiter erleichtert und gleichzeitig verhindert, daß der Rand der Stirnseite eventuell Lackschäden hervorrufen könnte.

In einer besonderen Variante der Erfindung ist der Vorsatz als Kappe mit balliger Vorderseite und einem daran anschließenden zylindrischen Bereich ausgebildet, wobei der Durchmesser der Kappe und des zylindrischen Bereiches zweckmäßigerweise so zu wählen ist, das er maximal dem Durchmesser des bolzenförmigen Elementes entspricht. Diese Variante der Erfindung vergrößert den Spielraum beim Einfädeln der Schrauben in die zugehörigen Öffnungen in der Karosserie und erleichtert dadurch den gesamten Montagevorgang.

Um die Kappe leicht montieren zu können, ist diese kraft- und/oder formschlüssig an einem aus der Stirnseite des bolzenförmigen Elementes hervorstehenden Dorn befestigt.

Eine weitere Variante der Erfindung ist dadurch gekennzeichnet, daß der Vorsatz als Pilz ausgebildet ist, der in einer Bohrung in der Stirnseite des bolzenförmigen Elementes kraftschlüssig oder durch eine Verklebung befestigt ist. Hierbei ist es zweckmäßig, wenn der größte Durchmesser des Pilzes höchstens dem Durchmesser des bolzenförmigen Elementes entspricht, so daß ebenso wie bei der Kappe das Einfädeln der bolzenförmigen Elemente in die Öffnungen in der Karosserie erleichtert wird, wobei es von Vorteil ist, wenn die Stirnseite des Vorsatzes kegelstumpfförmig gewölbt ist.

In einer weiteren Fortführung der Erfindung besteht der Vorsatz aus einem Kunststoff oder aus einem gummielastischen Material, wobei auch andere Materialien zum Einsatz kommen können, sofern deren Elastizität größer und/oder deren Härte niedriger ist, als diejenige der Lackschicht bzw. der Oberflächenbeschichtung.

Nachfolgend soll die Erfindung anhand von Ausführungsbeispielen näher erläutert werden. In den zugehörigen Zeichnungen zeigen
- Fig. 1: eine Schweißschraube mit einer in deren Stirnseite eingesetzten Kugel,
- Fig. 2: eine mit einer Kappe versehene Schweißschraube; und
- Fig. 3: eine Schweißschraube mit einem aufgesetzten Pilz.

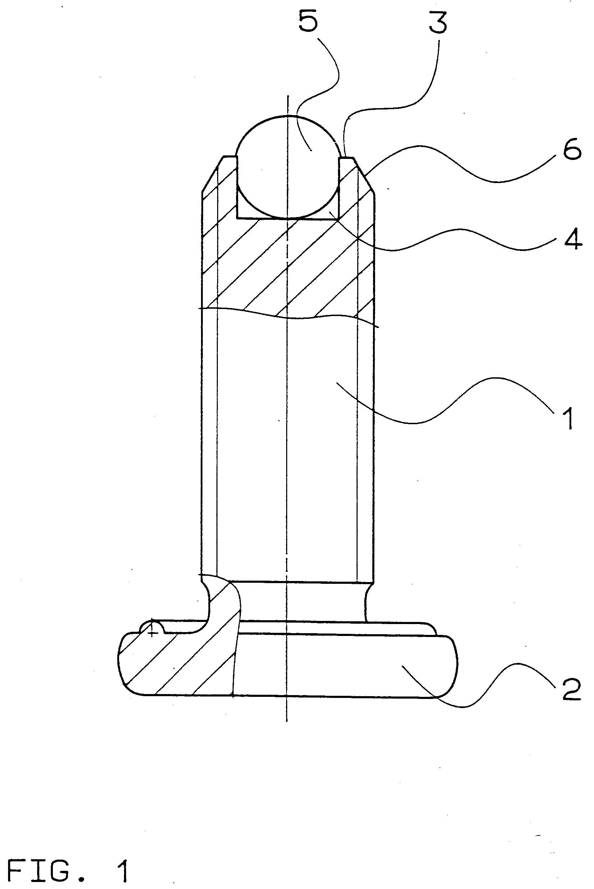

In den Fig. 1 bis 3 sind Schweißschrauben 1 dargestellt, die so ausgebildet sind, daß sie beispielsweise an Baugruppen von Kraftfahrzeugen durch Verschweißen befestigt werden können. Zu diesem Zweck ist an einem Ende der Schweißschraube 1 eine rotationssymmetrische Grundplatte 2 angeformt, die entweder flächig auf die Baugruppe aufgeschweißt wird, oder vorzugsweise indem die Schweißschraube 1 zuerst durch eine Bohrung in der Baugruppe hindurchgeführt und anschließend verschweißt wird.

Wie aus Fig. 1 ersichtlich, ist die Stirnseite 3 der Schweißschraube 1 die der Grundplatte 2 gegenüberliegt, mit einer zentrischen Bohrung 4 versehen, in die eine Kugel 5 kraftschlüssig in der Weise eingelegt ist, daß die Kugel teilweise aus der Stirnseite 3 hervorsteht. Die Kugel 5 besteht dabei aus einem Material, welches eine geringere Härte aufweist, als das Beschichtungsmaterial, welches eine Öffnung oder Bohrung umgibt, in die die Schweißschraube 1 bei einem späteren Montagevorgang einzuführen ist. Beispielsweise kann es sich hierbei um Bohrungen in bereits endlackierten Karosserieteilen handeln. Das bedeutet, daß die Kugel 5 vorteilhaft aus einem Kunststoff oder einem gummielastischen Material bestehen kann.

Die kraftschlüssige Befestigung der Kugel 5 in der Bohrung 4 kann einfach dadurch erfolgen, daß der Durchmesser der Kugel 5 geringfügig größer gewählt wird, als der Durchmesser der Bohrung 4 und die Kugel 5 lediglich in diese eingepreßt wird. Die Tiefe der Bohrung 4 sollte dabei über der Hälfte des Durchmessers der Kugel 5 betragen, so daß die Kugel 5 nach dem Einpressen teilweise aus der Bohrung 4 hervorsteht. Auf diese Weise wird die Kugel 5 sicher befestigt, ohne daß zusätzliche Mittel zu deren Lagesicherung notwendig wären. Eine besonders gute Befestigung der Kugel ist ohnehin nicht erforderlich, da lediglich sichergestellt werden muß, daß diese während der Montage der Schweißschraube 1 an einer Baugruppe und deren Transport zum Montageort nicht herausfallen kann. Außerdem wird die Kugel 5 während des Einbaus der Baugruppe in die Karosserie hauptsächlich in axialer Richtung belastet, d.h., die einwirkenden Kräfte drücken die Kugel 5 in die Bohrung.

Damit lassen sich die bisher verwendeten Schweißschrauben sehr billig und in einer für die Massenproduktion geeigneten Weise verbessern, so daß einerseits die Gefahr einer Beschädigung empfindlicher Lackschichten sicher vermieden wird und andererseits eine wesentliche Erleichterung der Montagevorgänge von vorgefertigten Baugruppen in Karosserien oder Gehäuse von Maschinen o.dgl. erreicht wird.

Um diesen Vorgang noch weiter zu verbessern, ist die Stirnseite 3 der Schweißschraube 1 mit einer umlaufenden Fase 6 versehen.

Dadurch, daß der Durchmesser der Kugel 5 kleiner ist, als der Außendurchmesser der Schweißschraube 1, steht zu Beginn des Einfädelvorganges ein größerer Spielraum zur Verfügung, der das sogenannte "Anschnäbeln" einer Vielzahl von gleichzeitig durch Bohrungen hindurchzuführenden Schweißschrauben 1 erheblich erleichtert. Damit können die mit Kugeln 5 versehenen Schweißschrauben 1 besonders vorteilhaft bei der Montage von komplizierten Baugruppen mit einer Vielzahl von Befestigungsstellen, wie dies beispielsweise im Automobilbau der Fall ist, besonders vorteilhaft eingesetzt werden.

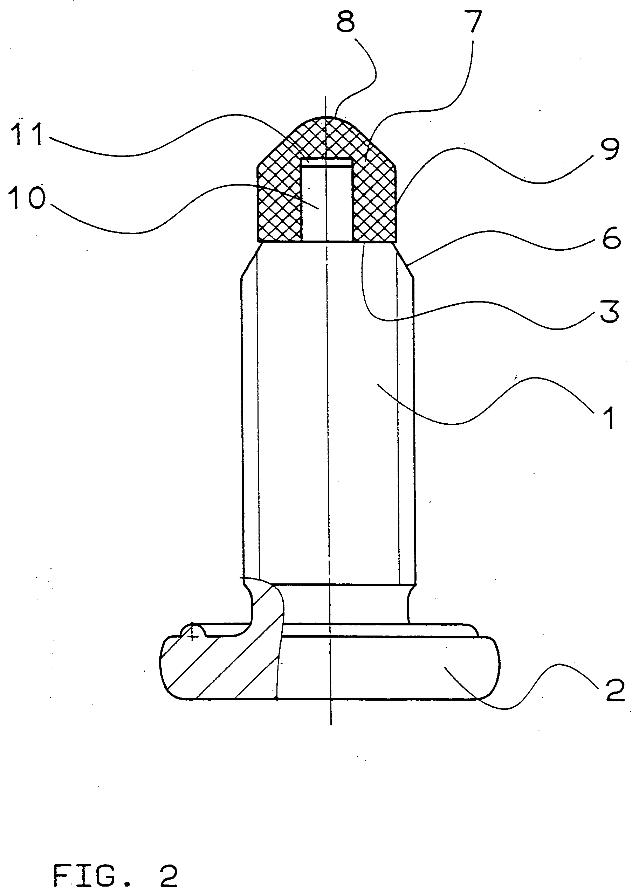

Eine Variante der Erfindung ist aus Fig. 2 ersichtlich, bei der die der Grundplatte 2 der Schweißschraube 1 gegenüberliegende Stirnseite 3 mit einer Kappe 7 aus einem Kunststoff oder einem gummielastischen Material versehen ist. Die Kappe 7 weist dabei eine ballige Vorderseite 8 und einen daran anschließenden zylindrischen Bereich 9 auf, wobei der Durchmesser der Kappe 7 und des zylindrischen Bereiches 9 zweckmäßigerweise so gewählt ist, das er maximal dem Durchmesser der Schweißschraube 1 entspricht. Diese Variante der Erfindung vergrößert den Spielraum beim Einfädeln der Schweißschrauben 1 in die zugehörigen Öffnungen in der Karosserie und erleichtert dadurch wie auch bei der bevorzugten Variante mit der Kugel 5 den gesamten Montagevorgang.

Für die kraft- und/oder formschlüssige Befestigung der Kappe 7 an der Schweißschraube 1 ist die Stirnseite 3 der Schweißschraube 1 mit einem zentrisch hervorstehenden Dorn 10 versehen, der in eine Sackbohrung 11 innerhalb der Kappe 7 einzuführen ist. Um die Kappe 7 kraftschlüssig befestigen zu können, genügt es, wenn der Durchmesser der Sackbohrung 11 geringfügig kleiner gewählt wird, als der Durchmesser des Dornes 10. Soll die Kappe 7 zusätzlich formschlüssig befestigt werden, so kann der Dorn mit einem Bund versehen werden, der in eine Ringnut innerhalb der Sackbohrung 11 einzurasten ist.

Es versteht sich, daß die Kappe 7 nicht unbedingt rotationssymmetrisch mit dem zylindrischen Bereich 9 und der Sackbohrung 11 ausgeführt werden muß, da auch andere Formen, wie z.B. ein Kegelstumpf, eine Pyramide oder z.B. Längsnuten in der Sackbohrung 11 mit den gleichen Vorteilen zum Einsatz kommen können.

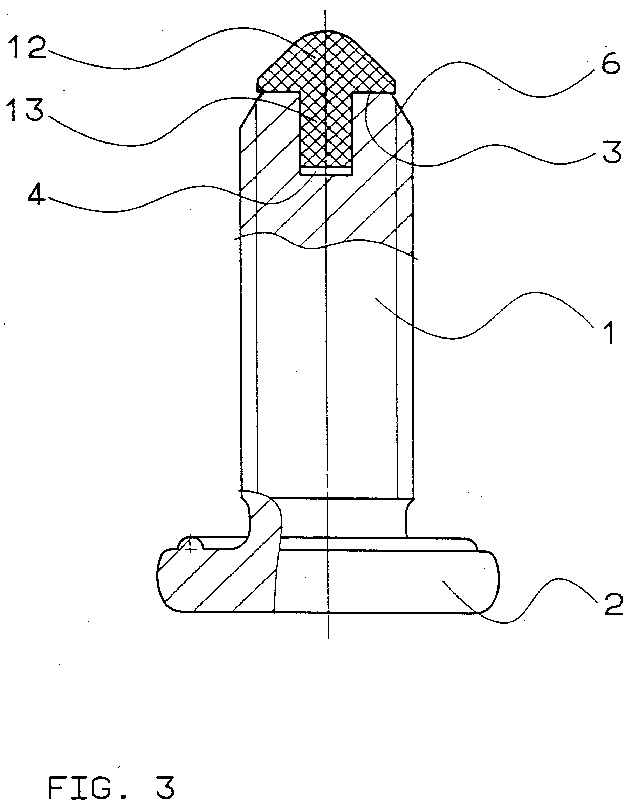

Eine weitere Variante der Erfindung ist in Fig. 3 dargestellt, bei der ein Pilz 12 aus einem Kunststoff oder einem gummielastischem Material in der Bohrung 4 in der Stirnseite 3 der Schweißschraube 1 kraftschlüssig oder durch eine Verklebung befestigt ist. Die Befestigung des Pilzes 12 erfolgt hierbei lediglich dadurch, daß dessen Schaft 13 kraftschlüssig in die Bohrung 4 eingepreßt wird, wobei es möglich ist, den Schaft 13 zusätzlich zu verkleben. Der größte Durchmesser des Pilzes 12 sollte höchstens dem Durchmesser der Schweißschraube 1 entsprechen, so daß ebenso wie bei der Verwendung der Kugel 5 oder der Kappe 7 das Einfädeln der Schweißschrauben 1 in Bohrungen in der Karosserie erleichtert wird. Dabei ist es von Vorteil, wenn der Pilz 12 kegelstumpfförmig gewölbt oder ballig ausgeführt ist.

Durch die erfindungsgemäße Ausgestaltung der Schweißschrauben 1 wird die Montage von vorgefertigten Baugruppen in Karosserien ganz erheblich verbessert, da einerseits ein leichtes Einfädeln ermöglicht wird und andererseits die Gefahr einer Beschädigung von Lackschichten oder Oberflächenbeschichtungen vollständig beseitigt ist.

Wie eingangs bereits dargelegt, kann die Erfindung in entsprechender Weise auch bei Verbindungsbolzen mit oder ohne Gewinde, Schweißbolzen, Befestigungsschrauben, Zentrierstiften o.dgl. angewendet werden.

### Bezugszeichenliste

- 1: Schweißschraube
- 2: Grundplatte
- 3: Stirnseite
- 4: Bohrung
- 5: Kugel
- 6: Fase
- 7: Kappe
- 8: Vorderseite
- 9: zylindrischer Bereich
- 10: Dorn
- 11: Sackbohrung
- 12: Pilz
- 13: Schaft

## Patentansprüche

1. Befestigungselement zur Montage von Baugruppen oder Bauteilen in oberflächenbeschichtete oder endlackierte Karosserien von Fahrzeugen oder in sonstige Gehäuse, mittels bolzenförmiger Elemente, wie Schrauben, Schweißschrauben, Gewindestifte, o.dgl., die einseitig an den Baugruppen befestigt sind, zur Herstellung von lösbaren Verbindungen durch Einfädeln der bolzenförmigen Elemente in entsprechende Öffnungen in der Karosserie oder dem Gehäuse und Verschrauben derselben, **dadurch gekennzeichnet,** daß das bolzenförmige Element an der Stirnseite (3) seines freien Endes mit einem Vorsatz aus einem Material versehen ist, dessen Härte geringer ist, als das im Bereich der Öffnungen befindliche Beschichtungsmaterial und daß der Vorsatz die Stirnseite (3) wenigstens teilweise überdeckt.

2. Befestigungselement nach Anspruch 1, **dadurch gekennzeichnet,** daß der Vorsatz an der Stirnseite (3) des bolzenförmigen Elementes in der Weise befestigt ist, daß der Vorsatz zumindest teilweise aus der Stirnseite (3) hervorsteht.

3. Befestigungselement nach Anspruch 1 und 2, **dadurch gekennzeichnet,** daß der Vorsatz rotationssymmetrisch ausgebildet ist.

4. Befestigungselement nach den Ansprüchen 1 bis 3, **dadurch gekennzeichnet,** daß die Stirnseite (3) des Vorsatzes zumindest im mittleren Bereich ballig abgerundet ist.

5. Befestigungselement nach den Ansprüchen 1 bis 4, **dadurch gekennzeichnet,** daß der Vorsatz als Kugel (5) ausgebildet ist, die in eine zentrische Bohrung (4) in der Stirnseite (3) des bolzenförmigen Elementes kraftschlüssig eingelegt ist und daß die Kugel (5) teilweise aus der Stirnseite (3) des Elementes hervorsteht.

6. Befestigungselement nach Anspruch 5, **dadurch gekennzeichnet**, daß die Stirnseite (3) des bolzenförmigen Elementes mit einer umlaufenden Fase (6) versehen ist.

7. Befestigungselement nach den Ansprüchen 1 bis 4, **dadurch gekennzeichnet,** daß der Vorsatz als Kappe (7) mit balliger Vorderseite (8) und einem daran anschließenden zylindrischen Bereich (9) ausgebildet ist.

8. Befestigungselement nach Anspruch 7, **dadurch gekennzeichnet,** daß der Durchmesser der Kappe (7) und des zylindrischen Bereiches (9) maximal dem Durchmesser des bolzenförmigen Elementes entspricht.

9. Befestigungselement nach Anspruch 7 und 8, **dadurch gekennzeichnet,** daß die Kappe (7) kraft- und/oder formschlüssig an einem aus der Stirnseite (3) des bolzenförmigen Elementes hervorstehenden (10) Dorn befestigt ist.

10. Befestigungselement nach den Ansprüchen 1 bis 4, **dadurch gekennzeichnet,** daß der Vorsatz als Pilz (12) ausgebildet ist, der in einer Bohrung (4) in der Stirnseite (3) des bolzenförmigen Elementes kraftschlüssig oder durch eine Verklebung befestigt ist.

11. Befestigungselement nach Anspruch 10, **dadurch gekennzeichnet,** daß der größte Durchmesser des Pilzes (12) höchstens dem Durchmesser des bolzenförmigen Elementes entspricht.

12. Befestigungselement nach einem der Ansprüche 7 bis 11, **dadurch gekennzeichnet,** daß die Stirnseite des Vorsatzes kegelstumpfförmig gewölbt ist.

13. Befestigungselement nach einem der Ansprüche 1 bis 12, **dadurch gekennzeichnet,** daß der Vorsatz aus einem Kunststoff besteht.

14. Befestigungselement nach einem der Ansprüche 1 bis 12, **dadurch gekennzeichnet,** daß der Vorsatz aus einem gummielastischem Material besteht.
